(19) Europäisches Patentamt
European Patent Office
Office européen des brevets

(11) **EP 1 800 247 B1**

(12) **EUROPEAN PATENT SPECIFICATION**

(45) Date of publication and mention
of the grant of the patent:
**01.11.2017 Bulletin 2017/44**

(51) Int Cl.:
***G06K 9/40*** *(2006.01)*     *G06T 3/40* *(2006.01)*

(21) Application number: **04781709.3**

(22) Date of filing: **20.08.2004**

(86) International application number:
**PCT/US2004/027083**

(87) International publication number:
**WO 2006/022729 (02.03.2006 Gazette 2006/09)**

(54) **EDGE ADAPTIVE IMAGE EXPANSION AND ENHANCEMENT SYSTEM AND METHOD**

RANDADAPTIVE BILDVERGRÖSSERUNG UND VERGRÖSSERUNGSSYSTEM UND -VERFAHREN

SYSTEME ET PROCEDE D'AMELIORATION ET D'EXPANSION D'IMAGES, ADAPTATIFS DE BORD

(84) Designated Contracting States:
**AT BE BG CH CY CZ DE DK EE ES FI FR GB GR HU IE IT LI LU MC NL PL PT RO SE SI SK TR**

(43) Date of publication of application:
**27.06.2007 Bulletin 2007/26**

(73) Proprietor: **QUALCOMM Incorporated**
**San Diego, CA 92121 (US)**

(72) Inventors:
- **LACHINE, Vladimir**
**Toronto, Ontario M4Y 2P7 (CA)**
- **SMITH, Gregory, Lionel**
**Toronto, Ontario M6S 4K6 (CA)**
- **LEE, Louie**
**Richmond Hill, Ontario L4C 0C4 (CA)**

(74) Representative: **Howe, Steven et al**
**Reddie & Grose LLP**
**The White Chapel Building**
**10 Whitechapel High Street**
**London E1 8QS (GB)**

(56) References cited:
**WO-A1-99/19834**     **US-A- 5 602 934**
**US-B1- 6 748 120**     **US-B2- 6 490 374**

- **DOYLE T ET AL: "PROGRESSIVE SCAN CONVERSION USING EDGE INFORMATION" SIGNAL PROCESSING OF HDTV, 2. TURIN, AUG. 30 - SEPT. 1, 1989; [PROCEEDINGS OF THE INTERNATIONAL WORKSHOP ON HDTV], AMSTERDAM, ELSEVIER, NL, vol. WORKSHOP 3, 30 August 1989 (1989-08-30), pages 711-721, XP000215289**
- **ZHAO M. AND DE HAAN G.: "Content-Adaptive Video Up-scaling" PROC. OF ASCI 2003 - HEIGEN, NL, 4 June 2003 (2003-06-04), XP002596083 ISBN: 90-803086-8-4**
- **NITZBERG M ET AL: "NONLINEAR IMAGE FILTERING WITH EDGE AND CORNER ENHANCEMENT" IEEE TRANSACTIONS ON PATTERN ANALYSIS AND MACHINE INTELLIGENCE, IEEE SERVICE CENTER, LOS ALAMITOS, CA, US LNKD-DOI:10.1109/34.149593, vol. 14, no. 8, 1 August 1992 (1992-08-01) , pages 826-833, XP000306302 ISSN: 0162-8828**
- **BAKKER P ET AL: "Edge preserving orientation adaptive filtering" PROCEEDINGS OF THE 1999 IEEE COMPUTER SOCIETY CONFERENCE ON COMPUTER VISION AND PATTERN RECOGNITION, JUNE 23-25, 1999; FORT COLLINS, COLORADO, IEEE, THE INSTITUTE OF ELECTRICAL AND ELECTRONICS ENGINEERS, INC, US, vol. 1, 23 June 1999 (1999-06-23), pages 535-540, XP010347626 ISBN: 978-0-7695-0149-9**
- **XIN LI ET AL: "New Edge-Directed Interpolation" IEEE TRANSACTIONS ON IMAGE PROCESSING, IEEE SERVICE CENTER, PISCATAWAY, NJ, US, vol. 10, no. 10, 1 October 2001 (2001-10-01), XP011025848 ISSN: 1057-7149**

**Description**

## FIELD OF THE INVENTION

The present invention relates to filtering methods in digital image data processing, and in particular, edge adaptive filtering for expansion and enhancement of digital image data.

## BACKGROUND OF THE INVENTION:

A digital image is basically a two-dimensional array of digital data with each entry representing a pixel of the digitized image. Each pixel data can have a few components like color, e.g. red, green, and blue. A crucial image processing operation is expanding an image by an arbitrary factor and thereby creating an enlarged image. Deinterlacing is an example of such an operation where a video field is enlarged in vertical direction with a 1:2 scale factor. It is well known that in creating an enlarged image from an original image, it is necessary to interpolate between pixels of the original digital data array to achieve a high quality output image. Some prior art methods for image expansion interpolate the horizontal and vertical dimensions of the digitized image separately. These methods generate noticeable artifacts in the expanded images. The worst two types of resulting artifacts are zigzags (also called "jaggies") and the blurring effects. Most zigzag and blurring effects occur along the edges, substantially affecting the perceived quality of expanded edges.

It is known in the art that edge adaptive interpolation, i.e., interpolation along the edges in a digital image produces better quality results over interpolation across the edges of the image.

United States Patent No. 5,991,664, to Hsu et. al., discloses a system for enhancing the resolution of a video image with classification and adaptive interpolation modules. The classification module generates a dominant orientation parameter for each original image pixel, and the adaptive interpolation module reads the dominant orientation parameter and selects one of the predeterminant parametric coefficient sets responsive to generate each target image pixel.

United States Patent No. 5,991,463 to Greggain et al. discloses a method of generating an upsampled target pixel, positioned between two lines of input source data. First, the difference in values of pixels of the digital source data in a region surrounding the upsampled target pixel to be generated in a number of directions are calculated and examined to detect an interpolation direction. Then, intermediate pixels between pixels on line segments of the input image are generated based on determined interpolation directions. And then, interpolations between the intermediate pixels are performed to generate the upsampled target pixel.

United States Patent No. 6,133,957 to Campbell discloses an adaptive diagonal interpolation method for image resolution enhancement that consists of interpolation direction detection by analysis of a weighted combination of a vertical direction and a best-choice diagonal direction. An interpolation circuit then generates a target pixel by interpolating neighborhood pixels that are along a direction represented by interpolation direction signal.

United States Patent No. 5,929,918 to Pereira et al. discloses an edge-oriented intra-field/inter-field interpolation filter for improved quality video appliances comprising four circuits. The first circuit detects an image edge. The second circuit uses output from the first circuit to generate a first signal corresponding to an average of the discrete image elements along a direction of the image edge. The third circuit uses output from the first circuit to detect a texture image area and for generating a second signal depending on a degree of existence of the image edge. The fourth circuit generates an output signal by combining the first signal with the third signal in a proportion dependent upon the second signal.

However, these and other prior art systems do not provide a high degree of adaptivity. The edge detection modules in prior art usually generate a direction of an edge but do not provide parameters describing the certainty of the edge, which can control the adaptive filter for better image quality. These systems are not adaptive to a certain edge scale. They usually exploit simple bilinear or bicubic interpolations that restrict the quality of the generated image. Therefore, there is a need for an improved interpolation system and method to support more flexible edge orientation and scale adaptive image enlargement and enhancement.

US 6,748,120 teaches a method and apparatus for solution conversion for digital image data. WO 99/19834, DOYLE T ET AL: "Progressive Scan Conversion Using Edge Information" Signal Processing of HDTV, 2. Turin, Aug. 30 - Sept. 1, 1989; [Proceedings of the International Workshop on HDTV], Amsterdam, Elsevier, NL, vol. Workshop 3, 30 August 1989, pages 711-721 and ZHAO M. AND DE HAAN G.: "Content-Adaptive Video Up-scaling" PROC. OF ASCI 2003 - Heigen, NL, 4 June 2003 teach increasing the resolution of an image using pixel interpolation.

## SUMMARY OF THE INVENTION

The present invention in one aspect provides a method as defined in claim 1.
The present invention in another aspect provides a system as defined in claim 11. In one example of the present invention, the AF footprint has elliptical shape with filter's coefficients generated from one-dimensional circular symmetrical profile.

In another example of the present invention, the AF footprint has a parallelogram shape with separable implementation of the 2D filter, i.e. first intermediate pixels along the edge orientation are calculated from the pixels belonging to the same rows of the footprint and then the intermediate pixels are integrated to form final interpolated output pixel's value.

In both examples the filter's coefficients are defined by edge parameters, so that softness or sharpness of the resulting image are controlled by these parameters.

Further details of different aspects and advantages of the embodiments of the invention will be revealed in the following description along with the accompanying drawings.

## BRIEF DESCRIPTION OF DRAWINGS

The accompanying drawings:

FIG. 1 represents an image processing system built according to the present invention;

FIG. 2 represents an example of a sampling model;

FIG. 3A represents a diagram of the frequency response of the adaptive filter for an elliptical footprint;

FIG. 3B represents a diagram of the frequency response of the adaptive filter for a skewed rectangular footprint;

FIG. 4 represents an example of gradients calculation;

FIG. 5 represents an example of a row sampling diagram for *skew=0*;

FIG. 6 represents an example of a row sampling diagram for *skew=-2*;

FIG. 7A represents an example of a shifted linear interpolation algorithm;

FIG. 7B represents an example of a cubic interpolation algorithm;

FIG. 8A represents the flow logic of an image processing system built in according to the present invention;

FIG. 8B represents the flow logic of an example of a system using gradient squared tensors for edge detection built in according to the present invention; and

FIG. 9 represents the flow logic of a deinterlacing system built in according to the present invention.

## DETAILED DESCRIPTION OF THE INVENTION

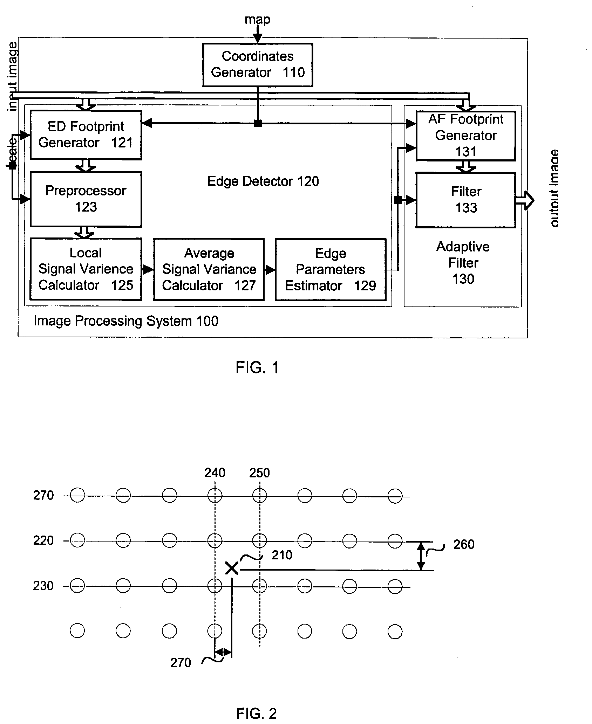

Built in accordance with the present invention FIG. 1 represents an illustrated example of an image processing system 100, which uses edge adaptive filtering to achieve image expansion and enhancement. Image processing system 100 comprises coordinates generator 110, which transforms pixel coordinates from an output image space onto an input image space, edge detection (ED) footprint generator 121 for including input pixels in an edge detection computation, preprocessor 123 for prefiltering and downsampling of the input image, local signal variance calculator 125 for computing input pixel's signal variances, average signal variance calculator 127 for generating a representation of signal behavior in a vicinity of the processed output pixel, edge parameters estimator 129 for calculating edge parameters, adaptive filter (AF) footprint generator 131 for including input pixels in a final filtering, and filter 133 for calculating the output pixel.

In an example of the invention, filtering is performed by first detecting a local edge and associated parameters such as orientation, anisotropy and gradient strength, and then, adaptively filtering input pixels over a footprint based on these parameters. Accordingly, the frequency response of the filter is signal controlled. As a consequence, the method of the present invention produces a smoother and more natural output image without jagging artifacts, while maintaining the sharpness of the original edges.

Image processing system 100 starts by receiving input digital image data at coordinates generator 110. This data, for instance, could be an input frame in a progressive video signal or a field in an interlaced video signal.

Then, coordinates generator 110 maps the coordinates of an output pixel onto the input image coordinate space. This transformation can range from a straightforward scaling to a complicated warping. Mapping output coordinates onto input coordinates, or so-called inverse transformation, has many advantages known to people skilled in the art, including covering the entire output pixel space and not leaving "holes" in the output image.

The mapped position of an output pixel in the input image coordinate space is, in general, somewhere between the input pixels. In one example of the invention, adapted for deinterlacing applications, the mapped coordinates are calculated via equations $x' = O_x + xS_x$ and $y' = O_y + yS_y$, where $x',y'$ are mapped coordinates of the output pixel in the input image coordinate space, $O_x,O_y$ are the offsets relative to the leftmost input column and the topmost input line, and $s_x,s_y$ are numbers of input columns and lines corresponding to each output column and line. For zooming applications the numbers of input columns and lines are less than one. The input image is considered to consist of an array of color samples, spaced on a uniform grid as shown in FIG. 2. Each output pixel is mapped onto a sample point **210** in the input image coordinate space.

In general, the output pixel mapped position point **210** is between two input pixel rows **220** and **230,** and between two input pixel columns **240** and **250.** When it falls exactly on a row or column, it is considered to be infinitesimally below or to the right. The integer part of the mapped vertical coordinate is thus the index of the input line **220** above the sample point. The integer part of the mapped horizontal coordinate is the index of the column **240** to its left. The fractional parts of these coordinates, **260** and **270,** determine the position of the sample point within a one-pixel square area. The position of the output, mapped point is used to find phase information for the resampling operation. It also determines which set of input pixels are to be analyzed for edge estimation for that particular output pixel.

Once the mapped coordinates in the input image space are known, ED footprint generator **121** determines a block of $MxN$ input pixels around the mapped coordinates. This block of pixels is then used for edge detection. Generally speaking, the size and shape of the block of input pixels is a trade-off between higher image quality and computational limitation. Meanwhile, the nature of the operation, like zooming in horizontal or vertical directions, is an important factor in determining the shape of the block. Another deciding factor is the type of the application. For instance, in video applications like deinterlacing, a number of pixel lines are usually read into a buffer for the processing operations. Since these lines are read out sequentially, a natural choice for the block would be simply a number of lines. In one example of this invention used in deinterlacing applications, the system uses 4 lines of a video image.

Preprocessor **123** then prefilters and downsamples data in the block of $MxN$ input pixels to produce an intermediate block of image data with adjusted resolution and reduced noise for the ensuing edge detection. As an example, since each frame of an interlaced video signal consists of two fields of vertically reduced resolution (e.g. by a factor of 2), the low-pass prefilter processes the luminance signal to limit its bandwidth in the horizontal direction.

Before explaining the edge detection formalism of the present invention it is necessary to distinguish edge "orientation" from edge "direction". A direction is defined over the full angle range of $2\pi$ (360°), but orientation is defined over a half angle range of $\pi$ (180°). This means that two vectors with opposite directions (angle difference of 180°) have the same orientation.

Edge detection most commonly includes three major operations: differentiation, smoothing, and labeling. Differentiation consists of evaluating the derivatives of the image. Smoothing consists of reducing noise in the image and regularizing the numerical differentiation. Labeling involves localizing edges and increasing the signal-to-noise ratio of the edge by suppressing false edges.

Local signal variance calculator **125** receives the intermediate block of image data from preprocessor **123.** To detect an edge, local signal variance calculator **125** computes variances for each pixel in the intermediate block of image data. Average signal variance calculator **127** then calculates the average variance for each mapped coordinate point, based on the local signal variances. Finally, edge parameters estimator **129** determines the edge orientation, strength and anisotropy based on the average variance. The specific workings of local signal variance calculator **125,** average signal variance calculator **127,** and edge parameters estimator **129** will be described in more detail.

Edge detection, in one example of the present invention, is implemented via the conventionally known gradient squared tensor (GST) calculation method. First, local signal variance calculator **125** computes the horizontal and vertical gradients (intensity variations from that pixel to the adjacent pixels) for pre-processed pixels inside the intermediate block of image data. Then, local signal variance calculator **125** computes local GST values for each pixel in the block based on the calculated gradients. Average signal variance calculator **127** then averages these GSTs to attribute an averaged GST (AGST) to the mapped point in the input image space coordinates. Edge parameters estimator **129** then uses this information to find a local edge at the position of the output pixel mapped coordinates.

A vectorial representation of the local orientation is introduced as a tensor $T = \dfrac{1}{\|v\|} vv^T = \dfrac{1}{\|v\|} \begin{pmatrix} x^2 & xy \\ xy & y^2 \end{pmatrix}$, where

$v=(x,y)^T$ is a vector along the dominant orientation and $\|v\| = \sqrt{x^2 + y^2}$ is the norm of the vector $v$. The main advantage of the tensor representation is that it describes the orientation in a continuous way. It makes one able to use larger areas to update the certainty of the estimate, as simply as, by local averaging in a specific region.

In this example, for the case of a color image with red, green, and blue (RGB) components, local signal variance calculator **125** computes the GST by calculating gradients and corresponding tensors for each of the three color components and then averaging these tensors to obtain the *GST* as in the following:

$$GST = \begin{pmatrix} \sum_{i=1}^{3} \left(g_x^i\right)^2 & \sum_{i=1}^{3} g_x^i g_y^i \\ \sum_{i=1}^{3} g_x^i g_y^i & \sum_{i=1}^{3} \left(g_y^i\right)^2 \end{pmatrix}.$$

Alternatively, local signal variance calculator **125** converts RGB components to conventionally known YUV components (luminance and two chrominance signals) which is the color space used in the video systems Alternatively, local signal variance calculator **125** directly obtains these components and calculates gradients over the luminance component only:

$$GST = \begin{pmatrix} \left(g_x^Y\right)^2 & g_x^Y g_y^Y \\ g_x^Y g_y^Y & \left(g_y^Y\right)^2 \end{pmatrix}.$$

The latter approach is more suitable for video signal processing, which is represented by YUV components.

In one example of the present invention, local signal variance calculator **125** calculates the GST as:

$GST = \begin{pmatrix} g_x g_x & g_x g_y \\ g_x g_y & g_y g_y \end{pmatrix}$, where $g_x(x,y) = \dfrac{\partial I(x,y)}{\partial x}$ and $g_y(x,y) = \dfrac{\partial I(x,y)}{\partial y}$ are horizontal and vertical derivatives and $I(x,y)$ represents the intensity of the image.

In order to reduce the probability of wrongfully detected image edges, average signal variance calculator **127** accumulates the local GSTs in the block of pixels with generally non-uniform weight coefficients $w_i$ :

$$AGST = \begin{pmatrix} G_{xx} & G_{xy} \\ G_{xy} & G_{yy} \end{pmatrix} = \begin{pmatrix} \sum_{j \in W} w_j \left(g_x^j\right)^2 & \sum_{j \in W} w_j g_x^j g_y^j \\ \sum_{j \in W} w_j g_x^j g_y^j & \sum_{j \in W} w_j \left(g_y^j\right)^2 \end{pmatrix}$$

Since this tensor is quadratic in form, the tensor elements may be averaged over the block without cancellation of opposite vectors.

Edge parameters estimator **129** calculates edge parameters, which serve as control parameters for adaptive filter **130**. In one example of image processing system **100,** edge parameters including orientation, anisotropy, and gradient strength are calculated.

The orientation, in a more particular example of this invention, is estimated based on the AGST, using principal component analysis. The major eigenvector of the AGST corresponds to the orientation in which the gradient is the largest. The ridge-valley orientation, in which the gradient is the smallest, is perpendicular to this axis, and therefore, it is given by the shortest eigenvector. The corresponding major $\lambda_1$ and minor $\lambda_2$ eigenvalues, and edge orientation angle $\alpha$, which is the angle of the shortest eigenvector, are calculated from the following equations:

$$\lambda_1 = \frac{\left(G_{xx} + G_{yy}\right) + \sqrt{\left(G_{xx} - G_{yy}\right)^2 + 4G_{xy}^2}}{2},$$

$$\lambda_2 = \frac{\left(G_{xx} + G_{yy}\right) - \sqrt{\left(G_{xx} - G_{yy}\right)^2 + 4G_{xy}^2}}{2},$$

$$\alpha = \frac{\angle(G_{xx} - G_{yy}, 2G_{xy}) + \pi}{2},$$

where,

$$\angle(x,y) = \begin{cases} 0, & (x=0)\,\&\,(y=0) \\ \pi/2, & (x=0)\,\&\,(y>0) \\ -\pi/2, & (x=0)\,\&\,(y<0) \\ \tan^{-1}(y/x), & x>0 \\ \tan^{-1}(y/x)+\pi, & x<0. \end{cases}$$

Anisotropy defines a certainty, or confidence level, of the edge orientation estimation. In one example of the invention, the anisotropy is measured from the ratio of difference to the sum of the two eigenvalues defined as

$A = \dfrac{\lambda_1 - \lambda_2}{\lambda_1 + \lambda_2} = \dfrac{\sqrt{(G_{xx} - G_{yy})^2 + 4G_{xy}^2}}{G_{xx} + G_{yy}}$ .  With this definition the anisotropy takes values between 0 and 1, indicating the range from completely isotropic (all orientations are equal) to perfectly anisotropic, respectively. Based on the value of the anisotropy, a corresponding threshold value switches the filtering between normal and orientation adaptive paths in this example of the invention.

Adaptive filter **130** treats edges with small gradient strength differently from the edges with large gradient strength. Comparing with a gradient strength preset threshold, adaptive filter **130** rejects an edge if the gradient strength is less than the preset threshold.

The edge parameters, generated by edge detector **120**, control the frequency response of adaptive filter **130**. First, AF footprint generator **131** determines a block of *PxQ* input pixels around the mapped coordinates calculated by coordinates generator **110**. In general, these input pixels may not be the same as the ones generated by ED footprint generator **121**. Filter **133** accumulates these pixels in the AF footprint with weights controlled by the edge parameters. In other words, frequency response of the filter **133** is controlled by the local edge, and thus, it is locally adapted to the particular input image neighborhood.

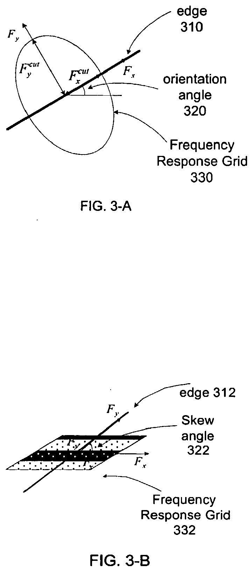

In one example of the adaptive filter **130**, an elliptical filter is used for signal enlargement and enhancement. The elliptical filter has an elliptical frequency response with two major cut-off frequencies: one along the edge and the other in the direction perpendicular to the edge as it is shown in FIG. 3A. Lengths of the ellipse axes are defined by the anisotropy parameter, so that sharpness of the final image is controlled by the certainty of the detected edge. This filter cannot be made Cartesian separable, but it can be implemented as a circularly symmetric one-dimensional filter with variable cut-off frequency between major and minor axes. In this example is a single-pass resampling is used without separating variables. The advantage of this example is the accuracy and greater output image quality. It is harder to implement from a hardware point of view due to the memory requirement to contain a copy of all the pixel data.

In another example of the adaptive filter **130**, a parallelogram filter footprint is used for signal enlargement and enhancement. Filter **133**, in this example, performs interpolation in two stages: horizontal resampling, and then interpolation along the edge orientation, amounting to a parallelogram footprint. Once more, sharpness of the final image is controlled by the certainty of the detected edge. This example of filter **133** has a two-dimensional frequency response with a parallelogram base, as it is shown in FIG. 3B. The two-pass sampling has the advantage that it is easier to implement from a hardware point of view though it might not yield the quality of an elliptical, single-pass filtering.

In yet a more particular example of this invention, designed for optimization of both the elliptical filtering and the parallelogram filtering, the input pixel space is divided up into a finite number of skew directions defined by the slope *dx/dy.* An edge orientation, once determined, is estimated by the nearest skew orientation. This optimization has an advantage in computational implementation as it makes pixel inclusion in the footprint much easier. With a parallelogram filter, for example, the intersection of a skew line with each input pixel row has a constant distance from the nearest input pixel. This significantly reduces the computational burden.

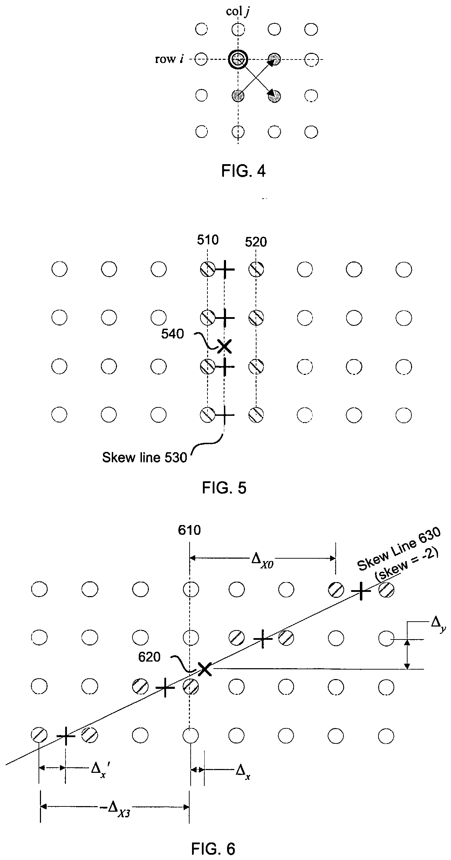

In this particular case of parallelogram filter, for each output pixel location, four pixels from the preprocessed intermediate image as shown in FIG.4 are used to calculate the following quantities:

$$g_{i,j}^{f} = p_{i+1,j+1} - p_{i,j}$$

$$g_{i,j}^{r} = p_{i,j+1} - p_{i+1,j}$$

$$g_{i,j}^{f\!f} = \left(g_{i,j}^{f}\right)^2 \qquad ,$$

$$g_{i,j}^{\Delta} = \frac{1}{2}\left(g_{i,j}^{f} + g_{i,j}^{r}\right)^2$$

$$g_{i,j}^{rr} = \left(g_{i,j}^{r}\right)^2$$

where the $p_{i,j}$ are the luminance components of the intermediate image generated by preprocessor **123**. It may be subsampled horizontally and vertically. The local values $g^{f\!f}, g^{\Delta}, g^{rr}$ from the surrounding area are then averaged in an area $W$ via the following equations:

$$G_{i,j}^{f\!f} = \sum_{a \in W} \sum_{b \in W} g_{i+a,j+b}^{f\!f} \ , \quad G_{i,j}^{\Delta} = \sum_{a \in W} \sum_{b \in W} g_{i+a,j+b}^{\Delta} \ , \quad G_{i,j}^{rr} = \sum_{a \in W} \sum_{b \in W} g_{i+a,j+b}^{rr} \ .$$

These averaged gradient values are used in the calculation of the overall gradient $G = \frac{1}{2}\left(G^{f\!f} + G^{rr}\right)$, the

anisotropy $A = \dfrac{\sqrt{V_x^{\,2} + V_y^{\,2}}}{G}$ , and two quantities $V_x = G^{\Delta} - G$ and $V_y = \frac{1}{2}\left(G^{f\!f} - G^{rr}\right)$. Altogether they define a skew value (integer) and a low-pass filter control value (*on* or *off*).

In order for an edge to be detected, $G$ and $A$ must be greater than threshold values $G_{min}$ and $A_{min}$, which are adjustable. Otherwise the skew is set to zero and low-pass operation is set to *off*.

The value of the skew (in pixels per row) corresponding to an edge orientation is defined as:

$$skew = -R_a \tan\left(\frac{\arg\!\left(V_x + jV_y\right)}{2}\right),$$

where $R_a$ is a ratio of horizontal and vertical resolutions (aspect ratio) of the intermediate image at the output of preprocessor **123**.

Later processing is simplified if the skew value is quantized (rounded) to one of several predetermined values. Rather than perform the calculation above, and then quantize the result, it is easier to enumerate each quantization threshold, and determine the $V_x/V_y$ ratio which produces it. Then, finding the quantized skew is a relatively simple matter of evaluating the signs of some linear functions of the form $a_k V_x + b_k V_y$. Each function is defined by the constants $a_k$, $b_k$ corresponding to a particular quantization threshold.

Assuming then that thresholds $G_{min}$ and $A_{min}$ are met, a skew value and a low-pass filter control signal are determined. The low-pass filter is always on, except when $(V_x, V_y)$ result in *skew=0*. In this zone, the edge is close to vertical and no processing is applied. The output at this stage is: *skew=0, lowpass=on.*

In the final edge parameters estimation formalism, to avoid abrupt changes in the skew from one pixel to the next, the initial edge estimate for the current pixel is examined along with those for the two pixels to the left and right. This is called the "conditioning step". If a skew value of zero results, the lowpass control may be *on* or *off*. In either case, this decision is unaffected by the conditioning step. Otherwise a maximum skew is calculated which is the absolute value of the average of the skew values found in the previous stage for the horizontally adjacent pixels.

If the magnitude of the current pixel's skew is greater than the maximum skew value, it is unaffected by the conditioning step. If it exceeds the maximum skew, it is clipped to this value. It retains its original sign. In the case where the current pixel's skew is non-zero prior to the conditioning step, and the maximum skew is zero, the conditioned skew will be zero and lowpass control will be off. This is the only case where the low-pass control is modified by the conditioning stage.

FIG. 5 shows a situation when *skew = 0* in this example of the present invention. In this case, the sample points on each row have the same horizontal coordinate as the output sample point. Assuming 2-tap (linear) interpolation is used in the horizontal direction and 4-tap (cubic) interpolation is used in the vertical direction, the eight shaded pixels in columns **510** and **520** are used to generate the four row samples along the skew line **530** and, ultimately, the single output sample **540**.

FIG. 6 shows the same output sample point as shown in FIG. 5 with *skew* = -2. In this case, the implementation of parallelogram filtering example of the present invention is paramount. The row sample points are derived from this simple geometric construction. Again, the shaded pixels are used to calculate the output pixel **620** around the skew line **630**. The position of each row sample is described by an integer part $\Delta_{Xi}$, which is the offset from the base column **610,** and is different for each of the four rows, and a fractional part $\Delta_x$, which is the same for all four rows since the skew is constrained to be an integer. In general,

$$\Delta_{Xi} = \left\lfloor \Delta_x - \tau - \frac{1}{2}f - skew \cdot \left( \Delta_y + 1 - i \right) \right\rfloor$$

$$= \left\lfloor \Delta_x - \tau - \frac{1}{2}f - skew \cdot \Delta_y \right\rfloor + skew \cdot (i-1) \text{ ,}$$

$$\Delta'_x = \text{frac}\left( \Delta_x - \tau - \frac{1}{2}f - skew \cdot \Delta_y \right)$$

where *f* is 0 or 1. When a low-pass mode is enabled, *f =1* is used; this creates an additional a half pixel displacement to the left. The constant $\tau$ is a small adjustment discussed below.

Filter **133** in this example consists of horizontal and vertical resampling stages.

The horizontal resampling stage, in one particular implementation, is based on the conventionally known Blu-Thévenaz-Unser (BTU) 'shifted linear' interpolation method. This technique mitigates the high-frequency loss of linear interpolation by using an Infinite Impulse Response (IIR) pre-filter. The prefilter has a phase shift at low frequencies, which is compensated by shifting the sample points.

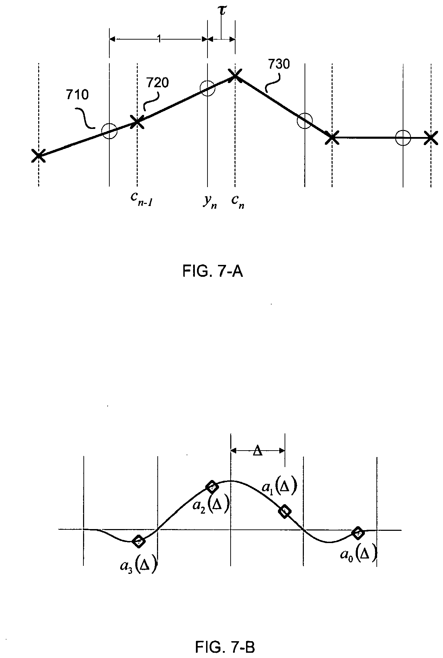

FIG. 7A shows how the BTU technique works. A new set of samples $c_n$, like new sample **720,** are constructed from the input $y_n$, and then linear interpolation is performed between these new samples. The new samples are constructed so that $y_n = \tau c_{n-1} + (1-\tau)c_n$ where $\tau$ is a fixed design parameter, and **730** is an interpolated waveform.

The next step is to create output samples by linearly interpolating the $c_n$, but at a position adjusted to the left by $\tau$. When the sample point is coincident with one of the $y_n$, the original $y_n$ will be reconstructed as per the equation above. Intermediate values can exhibit overshoot, etc., roughly consistent with a higher-order filter method. This method yields high quality while significantly reducing the computation. The prefilter is defined by the recursion

$$c_{-1} = 0$$

$$c_n = \frac{1}{1-\tau} y_n - \frac{\tau}{1-\tau} c_{n-1}, n \geq 0 \text{ .}$$

The input image samples are prefiltered as they arrive, and stored as $c_n$. So, the values operated on by the horizontal filter are actually $c_n$, not $y_n$. The horizontal sample points are shifted by $\tau$ to the left before linear interpolation.

The interpolation operates in two modes: a normal mode, which is simple linear interpolation of two adjacent $c_n$ samples; and a lowpass mode, producing a low-pass filter effect.

The normal mode is done according to the formula:

$$r_i = c_{i,k+\Delta_{Xi}} + \Delta'_x \left( c_{i,k+\Delta_{Xi}+1} - c_{i,k+\Delta_{Xi}} \right),$$

where *i* is a row index 0...3, $r_i$ is the row sample, *k* is the column index , and other symbols are as before (*c* now has a row subscript).

The lowpass mode uses three adjacent *c* values on each row. In order to select these three pixels, a ½ pixel shift to the left is incorporated in the calculation of $\Delta_{Xi}$; and $\Delta'_x$. Then the formula,

$$r_i = \frac{1}{2}\left[c_{i,k+\Delta_{Xi}} + c_{i,k+\Delta_{Xi}+1} + \Delta'_x\left(c_{i,k+\Delta_{Xi}+2} - c_{i,k+\Delta_{Xi}}\right)\right].$$

is used.

The vertical resampling stage of filter **133** is accomplished simply as

$$p = \sum_{i=0}^{N-1} a_i\left(\Delta_y\right) r_i \, ,$$

where $p$ is the output pixel, and $a_i(\Delta_y)$ is a resampling filter. In a particular implementation, $\Delta_y$ is quantized, and pre-calculated values are then selected by table lookup or similar. The filter may be based on a Keys interpolator for $N = 4$ according to FIG. 7-B as

$$a_0(\Delta) = -\frac{1}{2}(1 - \Delta)^2 \Delta$$

$$a_1(\Delta) = \frac{3}{2}\Delta^3 - \frac{5}{2}\Delta^2 + 1$$

$$a_2(\Delta) = a_1(1 - \Delta) = -\frac{3}{2}\Delta^3 + 2\Delta^2 + \frac{1}{2}\Delta$$

$$a_3(\Delta) = a_0(1 - \Delta) = -\frac{1}{2}(1 - \Delta)\Delta^2$$

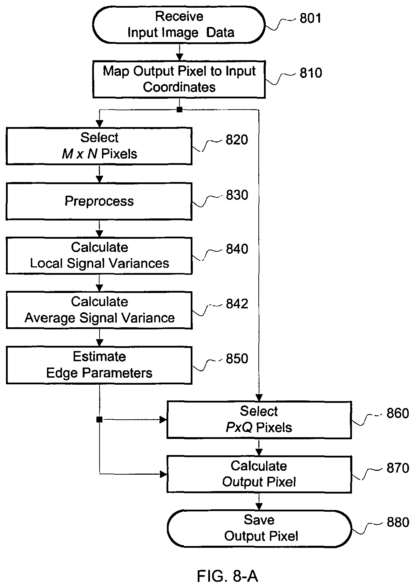

FIG. 8A represents the process steps executed by image processing system **100** according to an example of the present invention. At step **801**, image processing system **100** receives digital data corresponding to an input image. It may be frame or field. At step **810**, the coordinates of an output pixel are mapped onto input image coordinates. Then, at step **820**, a block of input $M \times N$ pixels around the mapped coordinates of the step **810** are chosen. At step **830**, this pixel data is pre-processed to reduce noise, and in the meantime, to change the resolution of the input image according to the desirable scale of the edges to be detected. At step **840**, for each prefiltered and downsampled pixel in the block, local signal variances are calculated. At step **842**, these local signal variances are used to calculate average signal variance. At step **850**, the edge parameters are determined based on average signal variance and according to these parameters, at step **860**, a block of $PxQ$ input image pixels is selected from the original input image around the mapped coordinates of step **810**. The number of pixels in this block and filter's footprint shape depend on the chosen topology of the filtering and it is a trade off between desired quality of the output and computational power as explained earlier in this disclosure. At step **870**, the output pixel is generated by interpolating the input pixels in the described block of $PxQ$ pixels. The weights of the interpolation depend on the edge parameters. At step **880** the output pixel is saved into the output frame buffer.

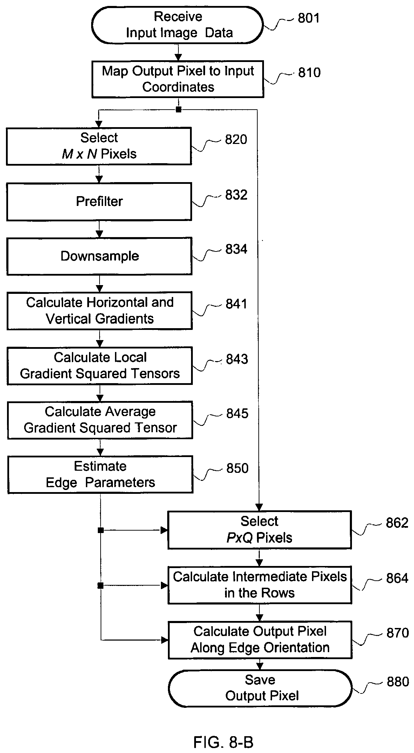

FIG. 8B shows the same flow logic diagram as FIG. 8-A with specific implementation of edge detector **120**. In this diagram signal variances are calculated as gradient squared tensors, and filtering is implemented in two passes as in the examples explained above.

Having explained the details of the invention we now disclose some specific application of image processing system **100**. One of the applications of the present invention is deinterlacing. There are two basic methods of deinterlacing. In the first method, the lines in the odd and even fields can be added together, which is known as "field weaving". In the second method, missing lines in each field are generated by interpolation without reference to the other field, which is known as "bobbing". However, it is often necessary to expand the image vertically simultaneously due to the concomitant conversion from interlaced to progressive video scan. For instance, if the input is NTSC *480i* interlaced video with *720x240* resolution for each of the two fields, and the output is to appear as 720p progressive video with *1280x720* resolution for the frame. Accordingly, the image must be scaled vertically from *240* lines per field to *720* lines per frame. Since interlaced fields are by nature under-sampled in the vertical direction, normal scaling results in jaggies on the edges close to horizontal axis, which will be enlarged in the scaling operation.

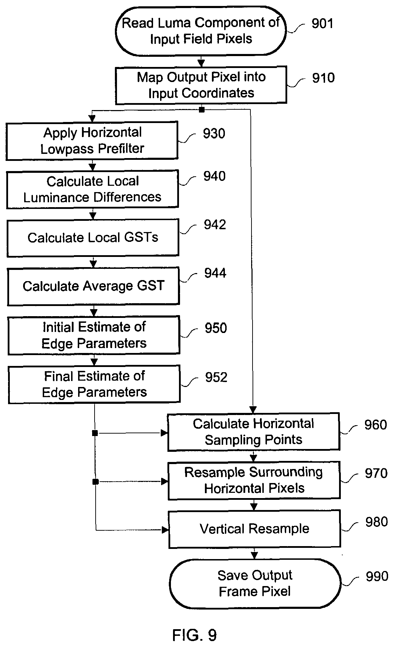

FIG. 9 represents the flow logic of an example of image processing system **100** adapted for bobbing operations with simultaneous scaling. In this example of the present invention, image processing system **100** is used for bobbing deinterlacing with simultaneous enlargement of the video field in horizontal and vertical directions. As described above, "bobbing" is where missing lines in each field are generated by interpolation without reference to the other field. This means that a scale in vertical direction may be not just 2 as in traditional deinterlacing but any value greater or equal to 1. Image processing system **100** adapts to the any particular scale while providing edge orientation filtering.

At step **901,** deinterlaced field digital data are obtained, which contain luminance and chrominance components. At step **910,** an output pixel coordinates are mapped onto the input image coordinate space. At step **930,** a horizontal low pass filter is applied to the luminance values of the input pixels to reduce noise and reset the scale for deinterlacing operations. At step **940,** local pixel luminance differences are calculated. At step **942,** based on local luminance differences, the local GST are calculated for each input pixel. At step **944,** the average GST is found , based on the local GST values in a pixel block surrounding the mapped output pixel position. At step **950,** an initial orientation and lowpass filter controls are determined for the output pixel position from the averaged GST. At step **952,** final orientation and lowpass filter controls are determined from the initial estimate for the current output pixel and horizontally adjacent pixels. At step **960,** horizontal sampling points in the pixel block are calculated. This is determined by the horizontal position and fractional vertical position, and by the skew. At step **970,** based on input pixels surrounding the horizontal sampling points, intermediate samples are calculated. The results are row samples. At step **980,** the row samples are combined (resampled vertically) using a 4-tap multiphase interpolation filter. The phase is selected using the fractional part of the vertical coordinate of the current sample point. Finally, at step **990,** after calculating all output pixels components, an output progressive scan frame is generated.

In one particular example of the deinterlacing application, both field weaving and bobbing are used depending on the motion strength detected. First, motion is detected between pixels of the adjacent fields. If the detected motion strength is lower than a predetermined lower limit, field weaving is used to produce the missing pixels, wherein the pixels from an adjacent field are used to produce a progressive scan frame. If the detected motion strength is higher than a predetermined upper limit, field bobbing is used, wherein the missing pixels are produced by rescaling and interpolating the current field. In case the motion strength lies between the two limits, the missing pixels are determined by interpolation between the two methods of bobbing and weaving according to the motion strength.

As will be apparent to those skilled in the art, various modifications and adaptations of the structure described above are possible without departing from the present invention, the scope of which is defined in the appended claims.

**Claims**

1. A method for expanding and enhancing input digital image data having an input coordinate space, and producing output digital image data having an output coordinate space with certain resolution and shape, by applying adaptive edge interpolation to an output pixel, said method comprising:

   a) obtaining the input digital image data;
   b) mapping the output pixel coordinates onto the input coordinate space obtained in step a);
   c) selecting a block of $M \times N$ input pixels around the mapped point of step b) wherein the shape and size of said block is determined based on a required edge resolution;
   d) applying lowpass filters to the input pixels of said block to reduce noise, and downsample to change the scale to adjust the aspect ratio, and to adapt to low
   angle edge detection;
   e) computing a local gradient square tensor for each downsampled pixel of (d) in said block to determine signal behavior;
   f) computing average gradient square tensor, based on the local gradient square tensor determined in (e) in said block, to determine average signal behavior
   in the block;
   g) determining orientation, anisotropy, and strength of an edge based on the average signal gradient square tensor in (f), wherein the edge orientation is estimated via:

      predefining a set of slopes in the *x-y* plane that have the same intersection distance from the nearest pixels in each input pixel row;
      characterizing these slopes with different skew line, wherein a skew line is defined as having a preset slope of *dx/dy,* and
      approximating the actual edge orientation with the nearest skew line, to facilitate the computation of the interpolating of the output pixel by eliminating the need for computation of the intersection of the edge orientation line with an input pixel row.

h) performing a conditioning step, the conditioning step comprising determining a maximum skew value as the absolute value of the average of the skew values of the current pixel and the two pixels to the left and right, clipping the absolute skew value of the current pixel to the maximum skew value when it exceeds the maximum skew value or when the current pixel skew value is non-zero and the maximum skew is zero setting a low-pass control signal to off and setting the skew value of the current pixel to zero;

i) determining the footprint of a parallelogram resamplingfilter in the input image at the mapped position determined in step b) along the edge orientation determined based on the conditioned skew value and determining the interpolation mode of the parallelogram resampling filter based on the low-pass control signal and determining the frequency response of the resampling filter based on the orientation, anisotropy, and strength of the edge determined in step g); and

j) determining the value of the output pixel via resampling in the footprint found in step i) according to the frequency response of step i).

2. The method of claim 1, wherein the average gradient square tensor of (f) is determined via:

I. computing horizontal and vertical gradients in each input pixel of the *MxN* block;
II. computing a local gradient squared tensor for each input pixel in said block based on the local gradients of "I"; and
III. computing the average gradient squared tensor for the block based on the local gradient tensors of "II".

3. The method of claim 1, wherein the method uses two-pass horizontal and vertical resampling based on the parallelogram frequency response.

4. The method of claim 1, wherein the parallelogram footprint is determined along the skew direction with the skew line parting the parallelogram in half to facilitate the computation of pixel inclusion for filtering, and wherein the method uses two-pass horizontal and vertical resampling based on a parallelogram frequency response.

5. The method of claim 1, applied to convert an interlaced video input to a progressive scan video output, wherein the method increases vertical scale and interpolates missing lines in afield to produce a progressive scan video frame.

6. The method of claim 1, applied to convert an interlaced video input to a progressive scan video output via:

(I) detecting motion strength in pixels of the interlaced video fields;
(II) generating the progressive scan frame by merging pixels from two adjacent interlaced fields when the detected motion strength is lower than a predetermined lower limit;
(III) generating the progressive scan frame by rescaling and interpolating a single interlaced field, using the method of claim 5, when the detected motion strength is higher than a predetermined upper limit; and
(IV) interpolating between (II) and (III) according to the motion strength, when the motion strength lies between the bwer and the upper limits.

7. The method of claim 1, wherein the method uses intermediate horizontal resampling of the output pixels from the surrounding input pixels based on shifted linear interpolation, determined by shifting the value of each pixel by a certain amount along the line connecting the values of two adjacent pixels and sampling these new values instead of the original pixel values to mitigate the high frequency loss.

8. The method of claim 1, wherein the coordinates mapping in step b) is a linear scaling.

9. The method of claim 1, wherein the coordinates mapping in step b) is warping.

10. The method of claim 1, wherein the frequency response of the filter in step i) is adaptive to the strength and anisotropy of the edge found in (g), to enhance the edge details if the edge anisotropy and strength are higher than a preset limit, and to smooth the edge details if the edge anisotropy and strength are lower than a preset limit.

11. A system for expanding and enhancing input digital image data having an input coordinate space, and producing output digital image data having an output coordinate space with certain resolution and shape, by applying adaptive edge interpolation to an output pixel, said system comprising:

(a) an interface to obtain input digital image data;

(b) a coordinates generator (110) to map the output pixel coordinates onto the input coordinate space;

(c) a first footprint generator (121), coupled to said interface and said coordinates generator, to select a block of *M x N* input pixels around the mapped point, wherein the shape and size of the block is determined based on the required edge resolution;

(d) a preprocessor (123), coupled to said first footprint generator, to apply lowpass filters to the input pixels of said block to reduce noise, and downsample to change the scale to adjust the aspect ratio, and to adapt to low angle edge detection;

(e) a variance calculator (125), coupled to said preprocessor, to compute a local gradient square tensor for each input pixel in said block to determine signal behavior;

(f) an integrator (127), coupled to said variance calculator, to compute an average gradient square tensor, based on the local gradient square tensor in said block, to determine average signal behavior in the block;

(g) an edge estimator (129), coupled to said integrator, to determine orientation, anisotropy, and strength of an edge, based on the average gradient square tensor found by said integrator, wherein said edge estimator is adapted to perform an edge orientation estimation via:

predefining a set of slopes in the *x-y* plane that have the same intersection distance from the nearest pixels in each input pixel row;

characterizing these slopes with different skew line, wherein a skew line is defined as having a preset slope of *dx/dy,*

approximating the actual edge orientation with the nearest skew line, to facilitate the computation of the interpolating of the output pixel by eliminating the need for computation of the intersection of the edge orientation line with an input pixel row;

(h) a conditioner, coupled to the edge estimator, to determine a maximum skew value as the absolute value of the average of the skew values of the current pixel and the two pixels to the left and right, clipping the absolute skew value of the current pixel to the maximum skew value when it exceeds the maximum skew value or when the current pixel skew value is non-zero and the maximum skew is zero setting a low-pass control signal to off and setting the skew value of the current pixel to zero;

(i) a second footprint generator (131), coupled to said interface, said coordinates generator, and said edge estimator, to determine of the footprint of a parallelogram resampling filter in the input image at the mapped position along the edge orientation based on the conditioned skew value, to determine the interpolation mode of the parallelogram resampling filter based on the low-pass control signal and to determine the frequency response of the parallelogram resampling filter based on the orientation, anisotropy and strength of the edge determined by said edge estimator; and

(j) a parallelogram filter (133), coupled to said second footprint generator and said edge estimator, to determine the value of the output pixel via resampling in the footprint and according to the frequency response found by said second footprint generator.

12. The system of claim 11, wherein said variance calculator and said integrator are adapted to compute the average gradient square tensor via:

I. computing horizontal and vertical gradients in each input pixel of the *MxN*

II. computing the local gradient squared tensor for each input pixel in said block based on the local gradients of "I";

III. computing the average gradient squared tensor for the block based on the local gradient tensors of "II".

13. The system of claim 11, wherein said filter is adapted to use two-pass horizontal and vertical resampling based on a parallelogram frequency response.

14. The system of claim 11, wherein said second footprint generator is adapted to determine a parallelogram footprint along the skew direction with the skew line parting the parallelogram in half to facilitate the computation of pixel inclusion for filtering, and wherein said filter is adapted to use two-pass horizontal and vertical resampling based on a parallelogram frequency response.

15. The system of claim 11, adapted to convert an interlaced video input to a progressive scan video output, wherein the system increases vertical scale and interpolates missing lines in a field to produce a progressive scan video frame.

16. The system of claim 11, adapted to convert an interlaced video input to a progressive scan video output via:

(I) detecting motion strength in pixels of the interlaced video fields;

(II) generating the progressive scan frame by merging pixels from two adjacent interlaced fields when the detected motion strength is lower than a predetermined lower limit;

(III) generating the progressive scan frame by rescaling and interpolating a single interlaced field, using the method of claim 8, when the detected motion strength is higher than a predetermined upper limit;

(IV) interpolating between (II) and (III) according to the motion strength, when the motion strength lies between the lower and the upper limits.

17. The system of claim 11, wherein the system is adapted to perform intermediate horizontal resampling of the output pixels from the surroundi ng input pixels based on shifted linear interpolation, determined by shifting the value of each pixel by a certain amount along the line connecting the values of two adjacent
pixels and sampling these new values instead of the original pixel values to mitigate the high frequency loss.

18. The system of claim 11, wherein said coordinate generator is adapted to perform coordinate mapping as a linear scaling.

19. The system of claim 11, wherein said coordinate generator is adapted to perform coordinate mapping as warping.

20. The system of claim 11, wherein said filter is adaptive to the strength and anisotropy of the edge, to enhance the edge details if the edge anisotropy and strength are higher than a preset limit, and to smooth the edge details if the edge anisotropy and strength are lower than a preset limit.

## Patentansprüche

1. Verfahren zum Vergrößern und Verbessern von digitalen Eingangsbilddaten mit einem Eingangskoordinatenraum und zum Produzieren von digitalen Ausgangsbilddaten mit einem Ausgangskoordinatenraum mit einer bestimmten Auflösung und Form durch Anwenden von adaptiver Randinterpolation auf ein Ausgangspixel, wobei das genannte Verfahren Folgendes beinhaltet:

a) Einholen der digitalen Eingangsbilddaten;

b) Mappen der Ausgangspixelkoordinaten auf den in Schritt a) erhaltenen Eingangskoordinatenraum;

c) Auswählen eines Blocks von $M \times N$ Eingangspixeln um den gemappten Punkt von Schritt b), wobei Form und Größe des genannten Blocks auf der Basis einer benötigten Randauflösung bestimmt werden;

d) Anwenden von Tiefpassfiltern auf die Eingangspixel des genannten Blocks, um Rauschen zu reduzieren, und Downsampeln zum Ändern der Skala zum Justieren des Aspektverhältnisses und zum Anpassen an niedrige Winkelranderkennung;

e) Berechnen eines lokalen Gradient-Quadrat-Tensors für jedes downgesampelte Pixel von (d) in dem genannten Block, um Signalverhalten zu bestimmen;

f) Berechnen eines durchschnittlichen Gradient-Quadrat-Tensors auf der Basis des in (e) in dem genannten Block bestimmten lokalen Gradient-Quadrat-Tensors, um das genannte durchschnittliche Signalverhalten in dem Block zu bestimmen;

g) Bestimmen von Orientierung, Anisotropie und Stärke eines Randes auf der Basis des durchschnittlichen Signal-Gradient-Quadrat-Tensors in (f), wobei die Randorientierung geschätzt wird durch:

Vordefinieren eines Satzes von Gefällen in der x-$y$-Ebene, die dieselbe Schnittdistanz von den nächsten Pixeln in jeder Eingangspixelreihe haben;

Kennzeichnen dieser Gefälle mit unterschiedlichen Schieflinien, wobei eine Schieflinie so definiert ist, dass sie ein voreingestelltes Gefälle von $dx/dy$ hat, und

Approximieren der tatsächlichen Randorientierung mit der nächsten Schieflinie, um die Berechnung des Interpolierens des Ausgangspixels durch Eliminieren der Notwendigkeit zum Berechnen des Schnittpunkts der Randorientierungslinie mit einer Eingangspixelreihe zu erleichtern;

h) Durchführen eines Konditionierungsschritts, wobei der Konditionierungsschritt das Bestimmen eines maximalen Schiefenwerts als den absoluten Wert des Durchschnitts der Schiefenwerte des aktuellen Pixels und der beiden Pixel links und rechts, Beschneiden des absoluten Schiefenwertes des aktuellen Pixels auf den maximalen Schiefenwert beinhaltet, wenn er den maximalen Schiefenwert übersteigt oder wenn der aktuelle Pixelschiefenwert ungleich null ist und die maximale Schiefe null ist, Einstellen eines Tiefpasssteuersignals auf aus und Einstellen des Schiefenwertes des aktuellen Pixels auf null;

i) Bestimmen des Profils eines Parallelogramm-Resampling-Filters im Eingangsbild an der in Schritt b) bestimmten abgebildeten Position entlang der auf der Basis des konditionierten Schiefenwertes bestimmten Randorientierung und Bestimmen des Interpolationsmodus des Parallelogramm-Resampling-Filters auf der Basis des Tiefpasssteuersignals und Bestimmen der Frequenzantwort des Resampling-Filters auf der Basis von Orientierung, Anisotropie und Stärke des Randes wie in Schritt g) bestimmt; und

j) Bestimmen des Wertes des Ausgangspixels durch Resampling in dem in Schritt i) gefundenen Profil gemäß der Frequenzantwort von Schritt i).

2. Verfahren nach Anspruch 1, wobei der durchschnittliche Gradient-Quadrat-Tensor von (f) bestimmt wird durch:

I. Berechnen von horizontalen und vertikalen Gradienten in jedem Eingangspixel des *MxN* Blocks;
II. Berechnen eines lokalen Gradient-Quadrat-Tensors für jedes Eingangspixel in dem genannten Block auf der Basis der lokalen Gradienten von "I"; und
III. Berechnen des durchschnittlichen Gradient-Quadrat-Tensors für den Block auf der Basis der lokalen Gradient-Tensoren von "II".

3. Verfahren nach Anspruch 1, wobei das Verfahren horizontales und vertikales Zweidurchgangs-Resampling auf der Basis der Parallelogramm-Frequenzantwort benutzt.

4. Verfahren nach Anspruch 1, wobei das Parallelogramm-Profil entlang der Schiefenrichtung bestimmt wird, wobei die Schiefenlinie das Parallelogramm halbiert, um die Berechnung von Pixeleinschluss zum Filtern zu erleichtern, und wobei das Verfahren horizontales und vertikales Zweidurchgangs-Resampling auf der Basis einer Parallelogramm-Frequenzantwort benutzt.

5. Verfahren nach Anspruch 1, angewendet zum Umwandeln eines verschachtelten Videoeingangs auf einen progressiven Scan-Video-Ausgang, wobei das Verfahren vertikale Skala vergrößert und fehlende Linien in einem Feld interpoliert, um einen progressiven Scan-Video-Frame zu erzeugen.

6. Verfahren nach Anspruch 1, angewendet zum Umwandeln eines verschachtelten Videoeingangs auf einen progressiven Scan-Video-Ausgang durch:

(I) Erkennen von Bewegungsstärke in Pixeln der verschachtelten Videofelder;
(II) Erzeugen des progressiven Scan-Frame durch Zusammenführen von Pixeln von zwei benachbarten verschachtelten Feldern, wenn die erkannte Bewegungsstärke niedriger ist als eine vorbestimmte untere Grenze;
(III) Erzeugen des progressiven Scan-Frame durch Neuskalieren und Interpolieren eines einzigen verschachtelten Feldes mit dem Verfahren von Anspruch 5, wenn die erkannte Bewegungsstärke höher ist als eine vorbestimmte obere Grenze; und
(IV) Interpolieren zwischen (II) und (III) gemäß der Bewegungsstärke, wenn die Bewegungsstärke zwischen der unteren und der oberen Grenze liegt.

7. Verfahren nach Anspruch 1, wobei das Verfahren horizontales Zwischen-Resampling der Ausgangspixel von den umgebenden Eingangspixeln auf der Basis von verschobener linearer Interpolation benutzt, bestimmt durch Verschieben des Wertes jedes Pixels um einen bestimmten Betrag entlang der Linie, die die Werte von zwei benachbarten Pixeln verbindet, und Abtasten dieser neuen Werte anstatt der ursprünglichen Pixelwerte, um den hohen Frequenzverlust abzuschwächen.

8. Verfahren nach Anspruch 1, wobei das Koordinaten-Mapping in Schritt b) eine lineare Skalierung ist.

9. Verfahren nach Anspruch 1, wobei das Koordinaten-Mapping in Schritt b) eine Verzerrung ist.

10. Verfahren nach Anspruch 1, wobei die Frequenzantwort des Filters in Schritt i) für die Stärke und Anisotropie des in (g) gefundenen Randes adaptiv ist, um die Randdetails zu verbessern, wenn Randanisotropie und Stärke höher sind als eine voreingestellte Grenze, und um die Randdetails zu glätten, wenn Randanisotropie und Stärke niedriger sind als eine voreingestellte Grenze.

11. System zum Vergrößern und Verbessern von digitalen Eingangsbilddaten mit einem Eingangskoordinatenraum und zum Produzieren von digitalen Ausgangsbilddaten mit einem Ausgangskoordinatenraum mit bestimmter Auflösung und Form durch Anwenden von adaptiver Randinterpolation auf ein Ausgangspixel, wobei das genannte System Folgendes umfasst:

(a) eine Schnittstelle zum Erhalten von digitalen Eingangsbilddaten;

(b) einen Koordinatengenerator (110) zum Mappen der Ausgangspixelkoordinaten auf den Eingangskoordinatenraum;

(c) einen ersten Profilgenerator (121), gekoppelt mit der genannten Schnittstelle und dem genannten Koordinatengenerator, zum Auswählen eines Blocks von $M \times N$ Eingangspixeln um den gemappten Punkt, wobei Form und Größe des Blocks auf der Basis der benötigten Randauflösung bestimmt werden;

(d) einen Vorprozessor (123), gekoppelt mit dem genannten ersten Profilgenerator, zum Anwenden von Tiefpassfiltern auf die Eingangspixel des genannten Blocks zum Reduzieren von Rauschen, und Downsampeln zum Ändern der Skala zum Justieren des Aspektverhältnisses und zum Anpassen an niedrige Winkelranderkennung;

(e) einen Varianzkalkulator (125), gekoppelt mit dem genannten Vorprozessor, zum Berechnen eines lokalen Gradient-Quadrat-Tensors für jedes Eingangspixel in dem genannten Block zum Bestimmen von Signalverhalten;

(f) einen Integrator (127), gekoppelt mit dem genannten Varianzkalkulator, zum Berechnen eines durchschnittlichen Gradient-Quadrat-Tensors auf der Basis des lokalen Gradient-Quadrat-Tensors in dem genannten Block, zum Bestimmen des durchschnittlichen Signalverhaltens in dem Block;

(g) einen Randschätzer (129), gekoppelt mit dem genannten Integrator, zum Bestimmen von Orientierung, Anisotropie und Stärke eines Randes, auf der Basis des von dem genannten Integrator gefundenen durchschnittlichen Gradient-Quadrat-Tensors, wobei der genannte Randschätzer zum Ausführen einer Randorientierungsschätzung ausgelegt ist durch:

Vordefinieren eines Satzes von Gefällen in der x-y-Ebene, die dieselbe Schnittdistanz von den nächsten Pixeln in jeder Eingangspixelreihe haben;

Kennzeichnen dieser Gefälle mit unterschiedlichen Schiefenlinien, wobei eine Schiefenlinie so definiert ist, dass sie ein voreingestelltes Gefälle von dx/dy hat,

Approximieren der tatsächlichen Randorientierung mit der nächsten Schiefenlinie, zum Erleichtern des Berechnens der Interpolation des Ausgangspixels durch Eliminieren der Notwendigkeit zum Berechnen des Schnittpunkts der Randorientierungslinie mit einer Eingangspixelreihe;

(h) einen Konditionierer, gekoppelt mit dem Randschätzer, zum Bestimmen eines maximalen Schiefenwertes als den absoluten Wert des Durchschnitts der Schiefenwerte des aktuellen Pixels und der beiden Pixel links und rechts, Beschneiden des absoluten Schiefenwertes des aktuellen Pixels auf den maximalen Schiefenwert, wenn er den maximalen Schiefenwert übersteigt oder wenn der aktuelle Pixelschiefenwert ungleich null ist und die maximale Schiefe null ist, Einstellen eines Tiefpasssteuersignals auf aus und Einstellen des Schiefenwertes des aktuellen Pixels auf null;

i) einen zweiten Profilgenerator (131), gekoppelt mit der genannten Schnittstelle, dem genannten Koordinatengenerator und dem genannten Randschätzer, zum Bestimmen des Profils eines Parallelogramm-Resampling-Filters im Eingangsbild an der gemappten Position entlang der Randorientierung auf der Basis des konditionierten Schiefenwertes, zum Bestimmen des Interpolationsmodus des Parallelogramm-Resampling-Filters auf der Basis des Tiefpasssteuersignals und zum Bestimmen der Frequenzantwort des Parallelogramm-Resampling-Filters auf der Basis von Orientierung, Anisotropie und Stärke des Randes, wie durch den genannten Randschätzer bestimmt; und

(j) ein Parallelogramm-Filter (133), gekoppelt mit dem genannten zweiten Profilgenerator und dem genannten Randschätzer, zum Bestimmen des Wertes des Ausgangspixels durch Resampling im Profil und gemäß der von dem genannten zweiten Profilgenerator gefundenen Frequenzantwort.

12. System nach Anspruch 11, wobei der genannte Varianzkalkulator und der genannte Integrator zum Berechnen des durchschnittlichen Gradient-Quadrat-Tensors ausgelegt sind durch:

I. Berechnen von horizontalen und vertikalen Gradienten in jedem Eingangspixel des $MxN$ Blocks;

II. Berechnen des lokalen Gradient-Quadrat-Tensors für jedes Eingangspixel in dem genannten Block auf der Basis der lokalen Gradienten von "I";

III. Berechnen des durchschnittlichen Gradient-Quadrat-Tensors für den Block auf der Basis der lokalen Gradient-Tensoren von "II".

**13.** System nach Anspruch 11, wobei das genannte Filter zum Benutzen von horizontalem und vertikalem Zweidurchgangs-Resampling auf der Basis der Parallelogramm-Frequenzantwort ausgelegt ist.

**14.** System nach Anspruch 11, wobei der genannte zweite Profilgenerator zum Bestimmen eines Parallelogramm-Profils entlang der Schiefenrichtung ausgelegt ist, wobei die Schiefenlinie das Parallelogramm halbiert, um das Berechnen von Pixeleinschluss zum Filtern zu erleichtern, und wobei das genannte Filter zum Benutzen von horizontalem und vertikalem Zweidurchgangs-Resampling auf der Basis einer Parallelogramm-Frequenzantwort ausgelegt ist.

**15.** System nach Anspruch 11, ausgelegt zum Umwandeln eines verschachtelten Videoeingangs in einen progressiven Scan-Video-Ausgang, wobei das System vertikale Skala vergrößert und fehlende Linien in einem Feld interpoliert, um einen progressiven Scan-Video-Frame zu erzeugen.

**16.** System nach Anspruch 11, ausgelegt zum Umwandeln eines verschachtelten Videoeingangs in einen progressiven Scan-Video-Ausgang durch:

(I) Erkennen von Bewegungsstärke in Pixeln der verschachtelten Videofelder;
(II) Erzeugen des progressiven Scan-Frame durch Zusammenführen von Pixeln von zwei benachbarten verschachtelten Feldern, wenn die erkannte Bewegungsstärke niedriger ist als eine vorbestimmte untere Grenze;
(III) Erzeugen des progressiven Scan-Frame durch Neuskalieren und Interpolieren eines einzelnen verschachtelten Feldes mit dem Verfahren nach Anspruch 8, wenn die erkannte Bewegungsstärke höher ist als eine vorbestimmte obere Grenze;
(IV) Interpolieren zwischen (II) und (III) gemäß der Bewegungsstärke, wenn die Bewegungsstärke zwischen der unteren und der oberen Grenze liegt.

**17.** System nach Anspruch 11, wobei das System zum Durchführen von horizontalem Zwischen-Resampling der Ausgangspixel von den umgebenden Eingangspixeln auf der Basis der verschobenen linearen Interpolation ausgelegt ist, bestimmt durch Verschieben des Wertes jedes Pixels um einen bestimmten Betrag entlang der Linie, die die Werte von zwei benachbarten Pixeln verbindet, und Abtasten dieser neuen Werte anstatt der ursprünglichen Pixelwerte, um den hohen Frequenzverlust abzuschwächen.

**18.** System nach Anspruch 11, wobei der genannte Koordinatengenerator zum Ausführen von Koordinaten-Mapping als eine lineare Skalierung ausgelegt ist.

**19.** System nach Anspruch 11, wobei der genannte Koordinatengenerator zum Durchführen von Koordinaten-Mapping als eine Verzerrung ausgelegt ist.

**20.** System nach Anspruch 11, wobei das genannte Filter an die Stärke und Anisotropie des Randes angepasst ist, zum Verbessern der Randdetails, wenn Randanisotropie und Stärke höher sind als eine voreingestellte Grenze, und zum Glätten der Randdetails, wenn Randanisotropie und Stärke niedriger sind als eine voreingestellte Grenze.

**Revendications**

**1.** Procédé d'expansion et d'amélioration de données d'image numérique d'entrée ayant un espace de coordonnées d'entrée, et produisant des données d'image numérique de sortie ayant un espace de coordonnées de sortie avec une certaine résolution et forme, en appliquant une interpolation adaptative de contour à un pixel de sortie, ledit procédé comprenant :

a) obtenir les données d'image numérique d'entrée ;
b) mapper les coordonnées du pixel de sortie sur l'espace de coordonnées d'entrée obtenues à l'étape a) ;
c) sélectionner un bloc de $M \times N$ pixels de sortie autour du point mappé de l'étape b) où la forme et la taille dudit bloc sont déterminées sur la base d'une résolution de contour requise ;
d) appliquer des filtres passe-bas aux pixels d'entrée dudit bloc pour réduire le bruit, et les sous-échantillonner afin de changer d'échelle pour ajuster le rapport largeur/hauteur, et pour adaptation à une détection de contour d'angle faible ;
e) calculer un tenseur gradient carré local pour chaque pixel sous-échantillonné de (d) dans ledit bloc pour déterminer un comportement de signal ;
f) calculer un tenseur gradient carré moyen, sur la base du tenseur gradient carré local déterminé sous (e) dans ledit bloc, afin de déterminer un comportement de signal moyen dans le bloc ;

g) déterminer une orientation, une anisotropie et une force d'un contour sur la base du tenseur gradient carré moyen de signal sous (f), où l'orientation du contour est estimée en :

prédéfinissant un ensemble de pentes dans le plan *x-y* qui ont la même distance d'intersection des pixels les plus proches dans chaque rangée de pixels d'entrée ;

caractérisant ces pentes avec une ligne d'obliquité différente, où une ligne d'obliquité est définie comme ayant une pente préréglée de *dx/dy,* et en

approximant l'orientation réelle du contour à la ligne d'obliquité la plus proche, pour faciliter le calcul de l'interpolation du pixel de sortie en éliminant le besoin de calculer l'intersection de la ligne d'orientation du contour avec un rangée de pixels d'entrée,

h) effectuer une étape de conditionnement, l'étape de conditionnement comprenant déterminer une valeur d'obliquité maximale comme la valeur absolue de la moyenne des valeurs d'obliquité du pixel courant et des deux pixels à gauche et à droite, écrêter la valeur d'obliquité absolue du pixel courant à la valeur d'obliquité maximale lorsqu'elle dépasse la valeur d'obliquité maximale ou lorsque la valeur d'obliquité du pixel courant est non zéro et l'obliquité maximale est zéro réglant un signal de commande passe-bas sur arrêt et réglant la valeur d'obliquité du pixel courant à zéro ;

i) déterminer l'empreinte d'un filtre de ré-échantillonnage en parallélogramme dans l'image d'entrée à la position mappée déterminée à l'étape b) le long de l'orientation du contour déterminée sur la base de la valeur d'obliquité conditionnée et déterminer le mode d'interpolation du filtre de ré-échantillonnage en parallélogramme sur la base du signal de commande passe-bas et déterminer la réponse séquentielle du filtre de ré-échantillonnage sur la base de l'orientation, de l'anisotropie et de la force du contour déterminées à l'étape g); et

j) déterminer la valeur du pixel de sortie en ré-échantillonnant dans l'empreinte trouvée à l'étape i) conformément à la réponse séquentielle de l'étape i).

2.  Procédé selon la revendication 1, dans lequel le tenseur gradient carré moyen de (f) est déterminé en :

I. calculant des gradients horizontaux et verticaux dans chaque pixel d'entrée du bloc $M \times N$;

II. calculant un tenseur gradient carré local pour chaque pixel d'entrée dans ledit bloc sur la base des gradients locaux de "I" ; et

III. calculant le tenseur gradient carré moyen pour le bloc sur la base des tenseurs gradients locaux de "II".

3.  Procédé selon la revendication 1, où le procédé utilise un ré-échantillonnage horizontal et vertical à deux passes sur la base de la réponse séquentielle en parallélogramme.

4.  Procédé selon la revendication 1, dans lequel l'empreinte en parallélogramme est déterminée le long d'une direction d'obliquité avec la ligne d'obliquité divisant le parallélogramme en deux pour faciliter le calcul d'inclusion de pixels pour le filtrage, et où le procédé utilise un ré-échantillonnage horizontal et vertical à deux passes sur la base d'une réponse séquentielle en parallélogramme.

5.  Procédé selon la revendication 1, appliqué pour convertir une entrée vidéo entrelacée à une sortie vidéo à balayage progressif, où le procédé augmente l'échelle verticale et interpole des lignes manquantes dans un champ afin de produire une trame vidéo à balayage progressif.

6.  Procédé selon la revendication 1, appliqué pour convertir une entrée vidéo entrelacée à une sortie vidéo à balayage progressif en :

(I) détectant une force de mouvement dans des pixels des champs vidéo entrelacés ;

(II) générant la trame à balayage progressif en fusionnant des pixels de deux champs entrelacés adjacents lorsque la force de mouvement détectée est plus basse qu'une limite inférieure prédéterminée ;

(III) générant la trame à balayage progressif en rechangeant d'échelle et en interpolant un seul champ entrelacé, en utilisant le procédé selon la revendication 5, lorsque la force de mouvement détectée est plus haute qu'une limite supérieure prédéterminée ; et

(IV) interpolant entre (II) et (III) conformément à la force de mouvement, lorsque la force de mouvement se trouve entre la limite inférieure et la limite supérieure.

7.  Procédé selon la revendication 1, où le procédé utilise un ré-échantillonnage horizontal intermédiaire des pixels de sortie provenant des pixels d'entrée périphériques sur la base d'une interpolation linéaire décalée, déterminée en décalant la valeur de chaque pixel d'un certain degré le long de la ligne connectant les valeurs de deux pixels adjacents et en échantillonnant ces nouvelles valeurs au lieu des valeurs des pixels d'origine afin d'atténuer la perte de haute fréquence.

8. Procédé selon la revendication 1, dans lequel le mappage des coordonnées à l'étape b) est un changement d'échelle linéaire.

9. Procédé selon la revendication 1, dans lequel le mappage des coordonnées à l'étape b) est une distorsion.

10. Procédé selon la revendication 1, dans lequel la réponse séquentielle du filtre à l'étape i) est adaptative à la force et à l'anisotropie du contour trouvé sous (g), afin d'améliorer les détails du contour si l'anisotropie et la force du contour sont plus hautes qu'une limite préréglée, et lisser les détails du contour si l'anisotropie et la force du contour sont plus basses qu'une limite préréglée.

11. Système d'expansion et d'amélioration de données d'image numérique d'entrée ayant un espace de coordonnées d'entrée, et produisant des données d'image numérique de sortie ayant un espace de coordonnées de sortie avec une certaine résolution et forme, en appliquant une interpolation adaptative de contour à un pixel de sortie, ledit procédé comprenant :

a) une interface pour obtenir des données d'image numérique d'entrée ;
b) un générateur de coordonnées (110) pour mapper les coordonnées du pixel de sortie sur l'espace de coordonnées d'entrée obtenues ;
c) un premier générateur d'empreinte (121), couplé à ladite interface et audit générateur de coordonnées, pour sélectionner un bloc de $M \times N$ pixels de sortie autour du point mappé, où la forme et la taille du bloc sont déterminées sur la base d'une résolution de contour requise ;
d) un préprocesseur (123), couplé audit premier générateur d'empreinte, pour appliquer des filtres passe-bas aux pixels d'entrée dudit bloc pour réduire le bruit, et sous-échantillonner afin de changer d'échelle pour ajuster le rapport largeur/hauteur, et pour adaptation à une détection de contour d'angle faible ;
e) un calculateur de variance (125), couplé audit préprocesseur, pour calculer un tenseur gradient carré local pour chaque pixel d'entrée afin de déterminer un comportement de signal ;
f) un intégrateur (127), couplé audit calculateur de variance, pour calculer un tenseur gradient carré moyen, sur la base du tenseur gradient carré local dans ledit bloc, afin de déterminer un comportement de signal moyen dans le bloc ;
g) un estimateur de contour (129), couplé audit intégrateur, pour déterminer une orientation, une anisotropie et une force d'un contour sur la base du tenseur gradient carré moyen trouvé par ledit intégrateur, où ledit estimateur de contour est adapté pour effectuer une estimation d'orientation du contour en :

prédéfinissant un ensemble de pentes dans le plan $x$-$y$ qui ont la même distance d'intersection des pixels les plus proches dans chaque rangée de pixels d'entrée;
caractérisant ces pentes avec une ligne d'obliquité différente, où une ligne d'obliquité est définie comme ayant une pente préréglée de $dx/dy$,
approximant l'orientation réelle du contour à la ligne d'obliquité la plus proche, pour faciliter le calcul de l'interpolation du pixel de sortie en éliminant le besoin de calculer l'intersection de la ligne d'orientation du contour avec un rangée de pixels d'entrée ;

h) un conditionneur, couplé à l'estimateur de contour, pour déterminer une valeur d'obliquité maximale comme la valeur absolue de la moyenne des valeurs d'obliquité du pixel courant et des deux pixels à gauche et à droite, écrêter la valeur d'obliquité absolue du pixel courant à la valeur d'obliquité maximale lorsqu'elle dépasse la valeur d'obliquité maximale ou lorsque la valeur d'obliquité du pixel courant est non zéro et l'obliquité maximale est zéro et régler un signal de commande passe-bas sur arrêt et régler la valeur d'obliquité du pixel courant à zéro ;
i) un deuxième générateur d'empreinte (131), couplé à ladite interface, audit générateur de coordonnées et audit estimateur de contour, pour déterminer l'empreinte d'un filtre de ré-échantillonnage en parallélogramme dans l'image d'entrée à la position mappée le long de l'orientation du contour sur la base de la valeur d'obliquité conditionnée, et pour déterminer le mode d'interpolation du filtre de ré-échantillonnage en parallélogramme sur la base du signal de commande passe-bas et pour déterminer la réponse séquentielle du filtre de ré-échantillonnage sur la base de l'orientation, de l'anisotropie et de la force du contour déterminées par ledit estimateur de contour ; et

j) un filtre en parallélogramme (133), couplé audit deuxième générateur d'empreinte et audit estimateur de contour, pour déterminer la valeur du pixel de sortie en ré-échantillonnant dans l'empreinte et conformément à la réponse séquentielle trouvée par ledit deuxième générateur d'empreinte.

**12.** Système selon la revendication 11, dans lequel ledit calculateur de variance et ledit intégrateur sont adaptés pour calculer le tenseur gradient carré moyen en :

I. calculant des gradients horizontaux et verticaux dans chaque pixel d'entrée du bloc $M \times N$;
II. calculant le tenseur gradient carré local pour chaque pixel d'entrée dans ledit bloc sur la base des gradients locaux de "I" ; et
III. calculant le tenseur gradient carré moyen pour le bloc sur la base des tenseurs gradients locaux de "II".

**13.** Système selon la revendication 11, dans lequel ledit filtre est adapté pour utiliser un ré-échantillonnage horizontal et vertical à deux passes sur la base d'une réponse séquentielle en parallélogramme.

**14.** Système selon la revendication 11, dans lequel ledit deuxième générateur d'empreinte est adapté pour déterminer une empreinte en parallélogramme le long d'une direction d'obliquité avec la ligne d'obliquité divisant le parallélogramme en deux pour faciliter le calcul d'inclusion de pixels pour le filtrage, et dans lequel ledit filtre est adapté pour utiliser un ré-échantillonnage horizontal et vertical à deux passes sur la base d'une réponse séquentielle en parallélogramme.

**15.** Système selon la revendication 11, adapté pour convertir une entrée vidéo entrelacée à une sortie vidéo à balayage progressif, où le système augmente l'échelle verticale et interpole des lignes manquantes dans un champ afin de produire une trame vidéo à balayage progressif.

**16.** Système selon la revendication 11, adapté pour convertir une entrée vidéo entrelacée à une sortie vidéo à balayage progressif en :

(I) détectant une force de mouvement dans des pixels des champs vidéo entrelacés ;
(II) générant la trame à balayage progressif en fusionnant des pixels de deux champs entrelacés adjacents lorsque la force de mouvement détectée est plus basse qu'une limite inférieure prédéterminée ;
(III) générant la trame à balayage progressif en rechangeant d'échelle et en interpolant un seul champ entrelacé, en utilisant le procédé selon la revendication 8, lorsque la force de mouvement détectée est plus haute qu'une limite supérieure prédéterminée ; et
(IV) interpolant entre (II) et (III) conformément à la force de mouvement, lorsque la force de mouvement se trouve entre la limite inférieure et la limite supérieure.

**17.** Système selon la revendication 11, où le système est adapté pour effectuer un ré-échantillonnage horizontal intermédiaire des pixels de sortie provenant des pixels d'entrée périphériques sur la base d'un interpolation linéaire décalée, déterminée en décalant la valeur de chaque pixel d'un certain degré le long de la ligne connectant les valeurs de deux pixels adjacents et en échantillonnant ces nouvelles valeurs au lieu des valeurs de pixels d'origine afin d'atténuer la perte de haute fréquence.

**18.** Système selon la revendication 11, dans lequel ledit générateur de coordonnées est adapté pour effectuer un mappage de coordonnées comme un changement d'échelle linéaire.

**19.** Système selon la revendication 11, dans lequel ledit générateur de coordonnées est adapté pour effectuer un mappage de coordonnées comme une distorsion.

**20.** Système selon la revendication 11, dans lequel ledit filtre est adaptatif à la force et à l'anisotropie du contour, afin d'améliorer les détails du contour si l'anisotropie et la force du contour sont plus hautes qu'une limite préréglée, et lisser les détails du contour si l'anisotropie et la force du contour sont plus basses qu'une limite préréglée.

map

Coordinates
Generator   110

input image

ED Footprint
Generator   121

Preprocessor
123

Edge Detector 120

Local
Signal Varience
Calculator   125

Average
Signal Variance
Calculator   127

Edge
Parameters
Estimator   129

AF Footprint
Generator
131

Filter
133

Adaptive
Filter
130

output image

Image Processing System 100

FIG. 1

240   250

270

220

260

210

230

270

FIG. 2

FIG. 3-A

FIG. 3-B

col $j$

row $i$

**FIG. 4**

510  520

540

Skew line 530

**FIG. 5**

610

$\Delta_{X0}$

Skew Line 630
(skew = -2)

620

$\Delta_y$

$\Delta_x{'}$

$\Delta_x$

$-\Delta_{X3}$

**FIG. 6**

FIG. 7-A

FIG. 7-B

Receive
Input Image Data — 801

Map Output Pixel to Input
Coordinates — 810

Select
*M x N* Pixels — 820

Preprocess — 830

Calculate
Local Signal Variances — 840

Calculate
Average Signal Variance — 842

Estimate
Edge Parameters — 850

Select
*PxQ* Pixels — 860

Calculate
Output Pixel — 870

Save
Output Pixel — 880

FIG. 8-A

Receive
Input Image Data ⟋~ 801

Map Output Pixel to Input
Coordinates ⟋~ 810

Select
*M x N* Pixels ⟋~ 820

Prefilter ⟋~ 832

Downsample ⟋~ 834

Calculate Horizontal and
Vertical Gradients ⟋~ 841

Calculate Local
Gradient Squared Tensors ⟋~ 843

Calculate Average
Gradient Squared Tensor ⟋~ 845

Estimate
Edge Parameters ⟋~ 850

Select
*PxQ* Pixels ⟋~ 862

Calculate Intermediate Pixels
in the Rows ⟋~ 864

Calculate Output Pixel
Along Edge Orientation ⟋~ 870

Save
Output Pixel ⟋~ 880

FIG. 8-B

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5991664 A, Hsu
- US 5991463 A, Greggain
- US 6133957 A, Campbell
- US 5929918 A, Pereira
- US 6748120 B
- WO 9919834 A

### Non-patent literature cited in the description

- **DOYLE T et al.** Progressive Scan Conversion Using Edge Information. *Signal Processing of HDTV*
- Proceedings of the International Workshop on HDTV. Elsevier, 30 August 1989, vol. 3, 711-721
- **ZHAO M. ; DE HAAN G.** Content-Adaptive Video Up-scaling. *PROC. OF ASCI 2003 - Heigen,* 04 June 2003